# EUROPEAN PATENT APPLICATION

(11) **EP 0 961 144 A1**
(43) Date of publication of application: **01.12.1999**
(21) Application number: 99304181.3
(22) Date of filing: 28.05.1999
(51) Int. Cl.: G02B 6/38

(54) **Fiber optic connector having a spring positioner**

(30) Priority: 29.05.1998 US 86817; 17.07.1998 US 118533; 17.05.1999 US 312621
(71) Applicant: Siecor Operations, LLC, Hickory, North Carolina 28601 (US); THE WHITAKER CORPORATION, Wilmington, DE 19808 (US)
(72) Inventor: Kevern, James D., Wellsville, PA 17365 (US); Rosson, Joel C., Hickory, North Carolina 28601 (US)
(74) Representative: MacDougall, Donald Carmichael

(57) **Abstract**

A fiber optic connector (11) is provided that includes a component part, such as a pin retainer (18) or guide pin clip, that serves as a spring positioner for engaging a spring (16) so as to retain the spring (16) in position laterally. Typically, the spring positioner is a recessed pocket (42) defined by the aft end (40) of the pin retainer (18) for receiving one end of the spring (16). The spring positioner serves to reduce or eliminate asymmetric forces that may be induced in an optical fiber and/or the component parts of a fiber optic connector (11) by a spring (16) that is positioned or cocked off-center.

## Description

### FIELD OF THE INVENTION

The present invention is generally related to fiber optic connectors and, more particularly, to fiber optic connectors having a spring positioner.

### BACKGROUND OF THE INVENTION

Optical fibers are used in many telecommunication applications. For example, optical fibers are used in data transmission applications because of their wide bandwidth and large capacity for carrying information in the form of light waves that are basically unaffected by electromagnetic fields.

As such, a number of fiber optic connectors, including a number of multi-fiber connectors, have been developed for mounting upon the end portions of one or more optical fibers. A conventional fiber optic connector includes an outer housing, also known as a connector body, and a ferrule disposed in the outer housing. The ferrule is mounted upon the end of at least one fiber and has a mating endface that provides a separable connection with the ferrule of another fiber optic connector to which it makes positive contact. In addition to the ferrule and the outer housing, a connector typically includes a plurality of other components, including a pin retainer (also known as a guide pin clip), a spring, a spring push member, a crimp ring (also known as a crimpable eyelet), a boot and a pair of guide pins.

In order to mount a connector, such as a multi-fiber MTP connector, upon the end portions of a plurality of optical fibers, the boot, the crimp ring and the spring push member are slid over the fanout jacket. After removing the jacket and the ribbon matrix from end portions of the optical fibers, the optical fibers are cleaned and a spring is slid over the optical fibers. The end portions of the optical fibers are ten inserted through respective bores defined by the multi-fiber ferrule. Once fully inserted, the end portions of the optical fibers can be secured within the ferrule by epoxy that is injected through a window defined by the ferrule. After the epoxy cures, the front face of the ferrule as well as the end portions of the optical fibers are polished.

After polishing the front face of the ferrule, the remainder of the components of a conventional multi-fiber connector are assembled. In this regard, the next component to be assembled is a guide pin assembly that includes a pin retainer and a pair of guide pins extending outwardly therefrom. During assembly, the guide pin assembly is positioned relative to the ferrule such that the pin retainer is adjacent the rear face of the ferrule and guide pins extend through respective passageways defined by the ferrule. After pulling the jacket and the strength members of the fiber optic cable from under the spring push member and flaring the strength members around the spring push member, the ferrule is inserted into the connector housing such that the front face of the ferrule is exposed through one end of the housing. Thereafter, the spring push member can be inserted into the opposite end of the housing and snapped into position, thereby sandwiching the spring in a somewhat compressed state between the spring push member and the aft surface of the pin retainer. After sliding the crimp ring over the strength members and onto the rear portion of the spring push member, the crimp ring can be crimped or otherwise radially compressed about the spring push member. Thereafter, the boot can be slid into position so as to surround the crimp ring, thereby completing the assembly of a conventional multi-fiber connector.

Once assembled, the spring biases the ferrule along a mating axis to accommodate axial tolerances within the connector in order to ensure that a positive contact is maintained with the mating connector. One challenge encountered with conventional fiber optic connectors is the difficulty in properly aligning two optical fibers at the mating interface. In this regard, if the optical connectors are not properly aligned, the optical fibers upon which the connectors are mounted will also not be properly aligned and problems, such as signal loss or attenuation, can occur. In a conventional fiber optic connector, the spring may not remain properly located along the mating axis and may move laterally or "cock" to one side or another so as to place an asymmetrical biasing force on the ferrule in a mated condition. Since the respective cores of the optical fibers through which the optical signals actually propagate are generally so small, the cores of the optical fibers are typically sensitive to any asymmetrical, or off-center forces. In this regard, asymmetrical forces, whatever their source, tend to urge an optical fiber out of proper alignment with respect to a corresponding optical fiber positioned in a mating connector, thereby disadvantageously increasing attenuation and other signal losses. When the spring moves away from the longitudinal axis, i.e., when the spring is cocked, the spring may also impose transverse forces directly on the fragile fibers within the connector so as to possibly physically damage the fibers or, at a minimum, to place stress on the fibers, thereby adversely affecting overall optical transmission performance. Given the high performance requirements and the correspondingly strict alignment requirements for abutting optical fibers, it is therefore desirable that the optical fibers be properly aligned within the connector and that all transverse and asymmetric forces on the optical fibers, and the parts used to position the optical fibers within the housing, be reduced or eliminated.

### SUMMARY OF THE INVENTION

The present invention is directed to a fiber optic connector having a spring positioner for retaining a spring in position laterally relative to other components of the connector and relative to the mating axis. The connector is comprised of a housing and a plurality of component parts that secure one or more optical fibers at least partially within the housing. According to the present invention, at least two of the component parts have at least one spring positioned between them. At least one of the two component parts serves as the spring positioner for maintaining the spring in the desired position. For example, the part that serves as the spring positioner can define a spring centering recess in the aft surface thereof. The recess of this embodiment is adapted to receive and position at least one end of the spring placed between the two components. As such, the spring positioner, such as the centering recess, serves to reduce or eliminate asymmetric forces that may be imposed on an optical fiber and/or the other component parts of a fiber optic connector by a spring that is cocked off-center. The optical signals transmitted via the fiber optic connector of the present invention that maintains the spring in a centered position should therefore be less likely to be attenuated than signals carried by convention fiber optic connectors that permit the respective springs to be cocked to one side or another.

Various parts of the fiber optic connector of the present invention can serve as the spring positioner. For example, the fiber optic connector can include a part dedicated to be a spring positioner. In one embodiment, however, the pin retainer defines a recess in the aft surface thereof for serving as the spring positioner. Alternatively, the fiber optic connector can include a spacer that defines a recess in the aft surface thereof for serving as the spring positioner or the ferrule itself may define a recess in the aft surface thereof for sewing as the spring positioner. Regardless of the component that serves as the spring positioner, the fiber optic connector of the present invention reduces, if not eliminates, lateral movement of the spring and the disadvantageous asymmetrical forces placed on the optical fibers by a laterally displaced spring.

In the embodiments in which the spring positioner is a recess defined in the aft surface of a component part, the recess can include a curved surface and, in one advantageous embodiment, has a substantially frustoconical shape. Typically, the recess is defined by sloped sidewalls and a bottom surface with a radiused transition between the sloped sidewalls and the bottom surface. While the sidewalls can be sloped in a number of different manners, the sidewalls of one advantageous embodiment are disposed at an angle of approximately 15° with respect to an imaginary line directed perpendicular to the remainder of the aft surface of the component part that defines the recess, i.e., with respect to the mating axis.

According to one embodiment of the present invention, the fiber optic connector has a pin retainer that includes a retainer body extending lengthwise between opposed forward and aft ends. The retainer body also defines a passageway extending between the forward and aft ends for receiving at least one optical fiber. The pin retainer of this embodiment also includes the spring positioner for engaging the spring so as to retain the spring in position laterally relative to the retainer body of the pin retainer. Typically, the spring positioner is a recessed pocket defined by the aft end of the retainer body for receiving one end of the spring. In this embodiment, the recessed pocket generally has a circular shape and is centered about that portion of the passageway defined by the retainer body that opens through the aft end of the retainer body. Alternatively, the spring positioner can include one or more projections extending outwardly from the aft end of the retainer body for engaging the spring. In either embodiment, the spring positioner prevents undesired lateral movement of the spring relative to the retainer body, thereby also avoiding the increased attenuation and possible physical damage created by lateral movement of a spring relative to the pin retainer of a conventional multi-fiber connector.

### BRIEF DESCRIPTION OF THE DRAWINGS

The invention may be understood by reference to the following description taken in conjunction with the accompanying drawings, in which like reference numerals identify like elements, and in which:
Figure 1 is an exploded perspective view of a fiber optic connector according to one embodiment;
Figure 2 is a perspective view of one illustrative embodiment of a pin retainer employing the present invention;
Figure 3 is a cross-sectional top view of the pin retainer shown in Figure 2;
Figure 4 is a front view of the pin retainer shown in Figures 2 and 3;
Figure 5 is an aft view of the pin retainer shown in Figures 2 and 3;
Figure 6 is an exploded perspective view of a fiber optic connector including a pin retainer according to another embodiment of the present invention; and
Figure 7a and 7b are perspective views of a pin retainer according to two alternative embodiments of the present invention illustrating pin retainers having different types of spring positioners.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF THE INVENTION

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

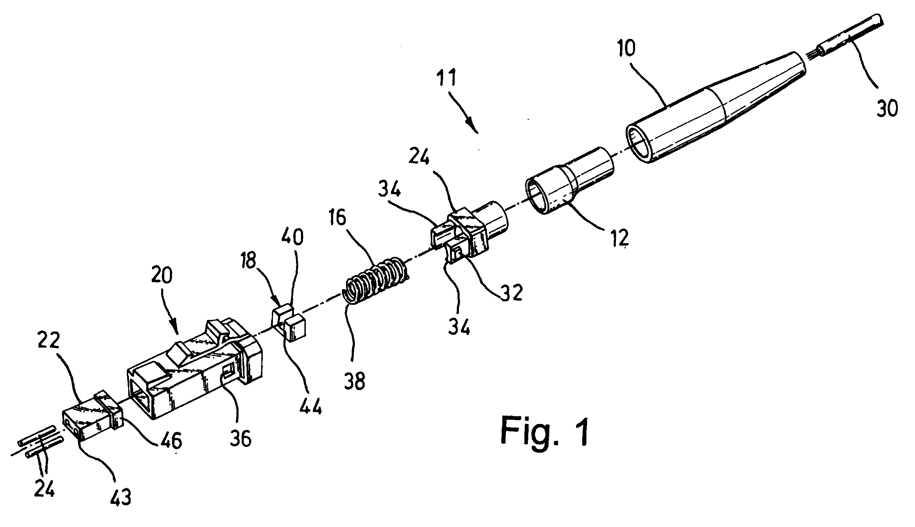

As shown in Figure 1, a fiber optic connector, such as a multi-fiber connector **11**, includes a number of components which must be assembled and mounted on the end portions of one or more optical fibers of a fiber optic cable **30**. While one exemplary embodiment is depicted in Figure 1, it should be readily apparent after a complete reading of this disclosure and the alternative embodiments presented herein that the present invention is not limited to any particular type or configuration of fiber optic connector. In any event, the fiber optic connector of the illustrated embodiment generally includes a connector housing **20** and a ferrule **22**, such as a multi-fiber MT ferrule as described by U.S. Patent No. 5,214,730 to Shinji Nagasawa, et al. The connector also includes guide pins **24** for extending through respective passageways **43** defined by the ferrule and a pin retainer **18** for engaging one end of the guide pins. As shown in Figure 1, the multi-fiber connector further includes a spring **16** for urging the pin retainer and the ferrule in a forward direction within the connector housing and a spring push member **24** which is secured to the strength members of the fiber optic cable by means of a crimp ring **12**. Although not shown in Figure 1, the fiber optic connector also generally includes a fiber lead-in tube which extends through the spring push member and the spring for facilitating insertion of the optical fibers into passageways defined through the pin retainer and the ferrule. Finally, the fiber optic connector can also include a strain relief boot **10** for providing at least some strain relief for the optical fibers.

The particular technique for assembling the components of a fiber optic connector **11** so as to mount the fiber optic connector upon one or more optical fibers is known to those skilled in the art and will therefore be only briefly described. In this regard, the optical fibers are secured to the housing **20** by the crimp ring **12**, the spring push member **14** and the strain relief boot **10**, as described above. The spring push member is then secured to the housing by a projection **32** formed on each of the arms **34** of the spring push member. The projections are adapted for mating engagement with recesses **36** defined by the housing.

A spring **16** is positioned between the spring push member **14** and the pin retainer **18**. The pin retainer has a forward surface **44** and an aft surface **40**. The forward surface and aft surface of the pin retainer describe the relative location of these surfaces with respect to the point where the optical fibers are actually mated. That is, the forward surface of the pin retainer is nearer to the point where the optical fibers are actually mated than the aft surface of the pin retainer. This forward and aft designation applies to any of the various components that may be used in the assembly of a fiber optic connector **11**.

The spring **16** is positioned between the arms **34** of the spring push member **14**. The spring has a forward end **38** that engages the aft surface **40** of the pin retainer **18** in the illustrated embodiment. As described in more detail hereinafter, the pin retainer also engages one end of each of a plurality of alignment pins **24**, typically two guide pins, that extend forwardly through openings **43** defined by the ferrule **22** such that the other end of each guide pin extends beyond the front face of the ferrule. In addition to engaging the guide pins, the forward end **44** of the pin retainer of this embodiment engages the aft surface **46** of the ferrule. When assembled, the spring provides a forward bias on the ferrule and also provides "float" for the optical fibers (not shown) to move upon contacting the optical fibers of a mated connector.

In conventional fiber optic connectors, the aft surface of the pin retainer is flat. As a result, when the spring is engaged with the aft surface of the pin retainer, the spring had a tendency, or at least the potential, for moving to an off-center position, thereby inducing asymmetric forces within the connector assembly, and on the component parts of the fiber optic connector and the optical fibers upon which the connector is mounted. As stated previously, such asymmetrical forces, and the misalignment that the asymmetric forces can cause, can have a negative impact on the quality of signals transmitted over mated optical fibers. In addition, an off-center placement of the spring presents a potential that the spring itself would touch and place transverse forces directly on the fragile fibers.

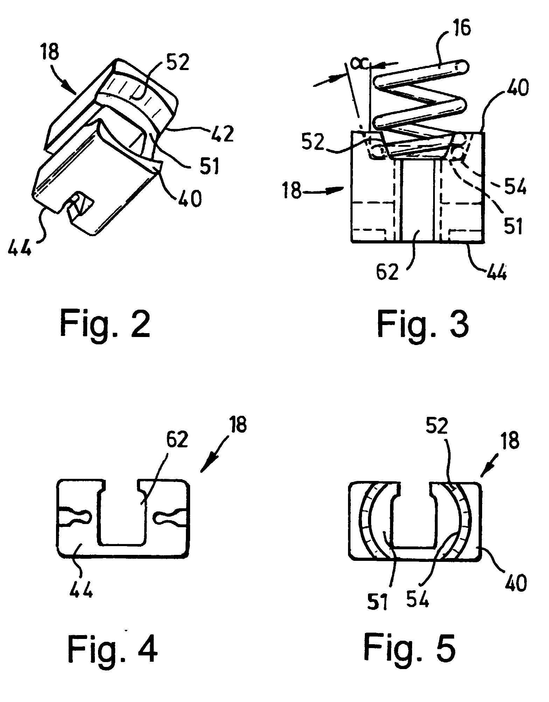

According to the present invention, at least one of the component parts of the fiber optic connector **11** includes or serves as a spring positioner to reduce, if not altogether prevent, lateral movement of the spring **16** relative to the optical fibers. In the illustrated embodiment, for example, the pin retainer **18** serves as the spring positioner, As shown in Figures 2-4, the pin retainer can define a recess **42** in the aft surface **40** thereof to serve as the spring positioner, The recess may be created by a variety of processes and techniques, including, but not limited to, molding, die casting or machining the recess into the aft surface of the pin retainer. The recess may be any variety of designs or configurations. In one embodiment, the recess is substantially frustoconical in shape and has a reaction face or bottom surface **51** and a pair of sloped sidewalls **52** extending rearwardly from the reaction face. While the sidewalls can be sloped in different manners, sloped sidewalls of one embodiment are formed at an angle α of approximately 15° with respect to an imaginary line perpendicular to the aft surface of the pin retainer or, in other words, with respect to the mating axis of the connector. Typically a radius **54** is formed at the intersection of the reaction face and the sloped sidewalls. The radius between the sloped sidewalls and the reaction face can have different sizes, but is typically equal to or slightly less than the radius of spring wire.

In one advantageous embodiment the recess **42** is sized and shaped to permit one end of the spring **16** to rest completely against the reaction face **51**. As described below, however, the recess can have other shapes and sizes, if so desired. In any event, the sidewalls **52** restrict transverse movement of the spring away from the mating axis of the connector **11**, while the radius **54** is desirably small enough to permit the reaction face and sidewalls to perform their respective functions without interference from the point of intersection between them.

As shown in Figure 3, one end of the spring **16** is positioned against the reaction face **51** within the recess **42** defined by the aft surface **40** of the pin retainer **18**. The reaction face acts to accept and transfer the force induced by the spring to the ferrule **22**. The reaction face preferably has a diameter that is equal to or slightly greater than the outer diameter of the spring. As will be appreciated by those skilled in the art, the recess acts to center and align the spring, thereby maintaining the spring in position along the mating axis such that asymmetrical forces produced by the spring are eliminated or reduced. In this regard, the sloped sidewalls **52** restrict transverse displacement of the spring, thereby also facilitating connector assembly.

As will be readily apparent to those skilled in the art, the present invention is not limited to the specific configuration of the pin retainer **18**, the spring push member **14**, or any other component disclosed above. To the contrary, the present invention is applicable to a vast variety of fiber optic connectors **11** having a vast variety of shapes, profiles and configurations. In this regard, the present invention will be useful in any fiber optic connector that uses a spring **16** as the means for accommodating axial tolerances while maintaining positive contact between mating fibers and/or the means for biasing any connector component in a lengthwise or axial direction.

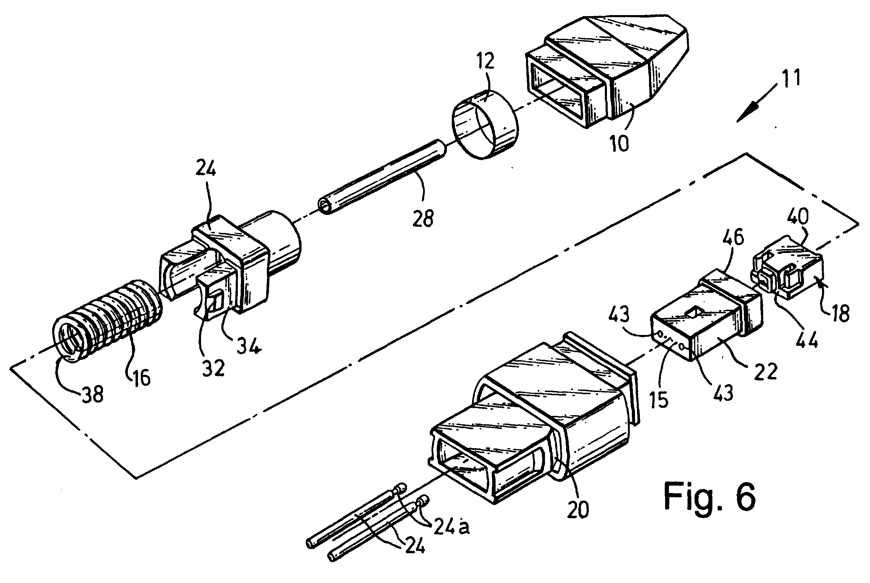

By way of example, another embodiment of a fiber optic connector **11** is depicted in Figure 6. As will be noted, the pin retainer **18** of the embodiment of Figure 6 is somewhat different than the pin retainer or guide pin clip of the embodiment of Figures 1-5 and will therefore be described in detail below. However, since the other components of the embodiment of Figure 6 are substantially the same as the corresponding components of the embodiment depicted in Figures 1-5, the other components will not again be separately discussed.

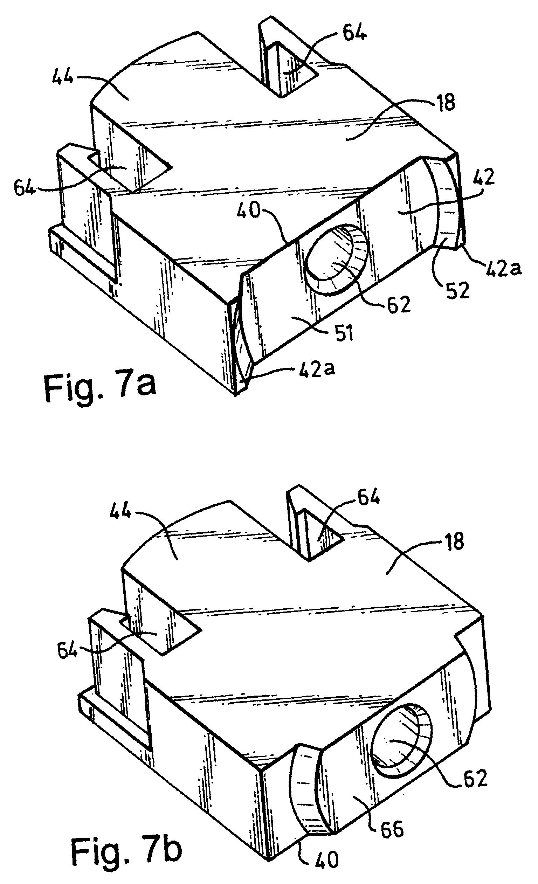

As shown, the pin retainer **18** includes a retainer body extending lengthwise between opposed forward and the aft ends **44**,**40**. Like the prior embodiment, the retainer body also defines a passageway **52** extending between the forward and aft ends for receiving the optical fibers. Although the passageway can have a variety of shapes and sizes, the passageway defined by the retainer body of one advantageous embodiment tapers from a larger opening in the aft end of the retainer body to a smaller opening in the forward end of the retainer body. See Figure 6. As shown in Figures 7a and 7b, the larger opening generally has a circular shape in lateral cross-section that is sized to be approximately equal to the size of the fiber lead-in tube **28** such that the fiber lead-in tube can be readily aligned with the opening in the aft end of the pin retainer, thereby facilitating insertion of the optical fibers from the fiber lead-in tube into the opening in the aft end of the retainer body. As shown in Figure 6, however, the smaller opening in the forward end of the retainer body preferably defines a laterally extending slit for positioning the optical fibers in the side-by-side relationship. By transitioning the optical fibers into a side-by-side relationship as the optical fibers advance through the tapering passageway, the optical fibers are positioned in a manner that facilitates their insertion into respective bores **15** extending through the ferrule **22** which are also arranged in a lateral side-by-side relationship.

The retainer body of the pin retainer **18** of the present invention also includes engagement portions, proximate the forward end **44** of the retainer body, for engaging the guide pins **24**. As shown in Figure 6, for example, embodiments of the fiber optic connector **11** which include two guide pins also generally include a pin retainer having a retainer body with two engagement portions for engaging respective ones of the guide pins. Each engagement portion generally defines an opening **64** that opens through the forward end of the retainer body and, in the illustrated embodiment, also through the upper surface of the retainer body. Each opening is also typically bounded on one side by a relatively thin, upstanding wall which is adapted to flex somewhat in order to accommodate insertion of the end portion of the respective guide pin into the opening.

In the illustrated embodiment in which each guide pin **24** includes a neck portion **24a** of reduced diameter proximate the end of the guide pin that is engaged by the pin retainer **18**, the forward end of the upstanding wall preferably includes an inwardly extending rib for engaging the neck portion of the respective guide pin as the end of the guide pin is inserted into the respective opening **64**. In order to facilitate insertion of the guide pins into the openings defined by the pin retainer, the inwardly extending ribs can be tapered as shown in Figures 7a and 7b. Once the ends of the guide pins have been inserted into the respective openings, the upstanding walls return to their original positions such that the pin retainer positively engages the guide pins. Although the upstanding wall portions which partially define the openings are depicted to be connected along two sides to the remainder of the retainer body, the walls can have other forms without departing from the spirit and scope of the present invention. For example, the walls can be formed by a pair of arms that extend forwardly from the retainer body so as to be connected to the remainder of the retainer body along only a single side.

As shown in Figures 7a and 7b, the pin retainer **18** of one advantageous embodiment also includes a spring positioner, proximate the aft end **40** of the retainer body, for engaging one end of the spring **16**. According to this embodiment, the spring positioner retains the spring in position laterally relative to the retainer body of the pin retainer. As shown in Figure 7a, the spring positioner can be formed by a recessed pocket **42** defined by the aft end of the retainer body for receiving one end of the spring, In order to apply relatively even forces upon the pin retainer and, in turn, the ferrule **22**, the spring is preferably centered relative to the pin retainer. As such, the spring positioner and, more particularly, the recessed pocket as shown in Figure 7a is also preferably centered within the aft end of the retainer body. Since the passageway **62** defined by the retainer body also generally opens through the center of the aft end of the retainer body, the recessed pocket of this embodiment is also preferably centered about that portion of the passageway that opens through the aft end of the retainer body.

As described above, the recessed pocket **42** of this embodiment of the spring positioner is preferably sized and shaped so as to match or correspond to the size and shape of the spring **16**. For helical springs having a generally circular shape in lateral cross-section, the recessed pocket also preferably has a generally circular shape in lateral cross-section. As shown in Figure 7a, however, the recessed pocket need not support the entire end of the spring, but can, instead, be open along the upper and lower sides of the pin retainer **18** since the diameter of the spring is generally larger than the height of the pin retainer. It is noted, however, that a sufficient percentage of the recessed pocket should be bordered by outwardly extending walls **42a** so as to prevent the spring from moving in any lateral direction relative to the retainer body of the pin retainer.

Although the pin retainer **18** of one advantageous embodiment includes a recessed pocket **42**, the spring positioner can be formed in different manners without departing from the spirit and scope of the present invention. For example, the spring positioner can include one or more projections **66** extending outwardly from the aft end **40** of the retainer body for engaging one end of the spring **16**. As shown in Figure 7b, for example, the projection can include a relatively large projection which fills the hollow interior of the end of the spring which contacts the pin retainer. However, the spring positioner can include other types of projections, such as one or more walls which extend along the inside and/or the outside of at least a portion of the end of the spring which contacts the aft end of the retainer body.

Regardless of the embodiment, the pin retainer **18** of the present invention which includes a spring positioner prevents the spring **16** from moving laterally relative to the retainer body of the pin retainer. As such, the spring is prevented from contacting the optical fibers which could increase the attenuation of the optical signals or could physically damage the optical fibers in some instances.

Although the fiber optic connectors **11** of the illustrated embodiments include pin retainers **18** that serve as the spring positioner by defining a recess **42** that holds one end of the spring, those skilled in the art will recognize that there are other possible configurations that would still employ the benefits and teachings of the present invention. For example, many fiber optic connectors do not employ guide pins **24** and, therefore, do not have a need for a pin retainer. Accordingly, the connectors of these embodiments can include a separate component, such as a spacer, that serves as the spring positioner, such as by defining a recess in one side thereof for receiving and centering the spring **16**. In this embodiment, the opposite side of the spacer may be for engagement with the ferrule **22**. Alternatively, the ferrule may serve as the spring positioner, such as by defining a recess in the aft surface thereof for direct engagement by the forward end of the spring.

Regardless of the component part that serves as the spring positioner, the fiber optic connector **11** of the present invention can maintain the proper alignment of the optical fibers in an easier fashion than in conventional connectors. In this regard, by securely aligning the spring **16** and reducing asymmetrical forces otherwise potentially imposed by the spring, the present invention helps to insure that optical fibers within a connector are free of interference and are properly aligned, thereby permitting signals to be transmitted between a pair of mated optical fibers with significantly less attenuation and other signal loss than in conventional fiber optic connectors in which the spring can be cocked to one side or the other.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A fiber optic connector comprising:
a housing;
a plurality of component parts at least partially disposed within said housing; and
at least one spring positioned between at least two of said component parts,
wherein one of said two component parts has an aft surface and defines at least one recess therein, said recess adapted to receive a portion of said at least one spring therein.

2. The fiber optic connector of Claim 1 wherein said at least one recess is partially defined by a curved surface.

3. The fiber optic connector of Claim 1 wherein said at least one recess has a substantially frustoconical shape.

4. The fiber optic connector of Claim 1 wherein said at least one recess partially defined by sloped sidewalls.

5. The fiber optic connector of Claim 4 wherein said recess is further defined by a bottom surface and a radiused transition between said sloped sidewalls and said bottom surface.

6. The fiber optic connector of Claim 4 wherein said sidewalls are positioned at an angle of approximately 15° with respect to a line perpendicular to the remainder of the aft surface of said component part.

7. The fiber optic connector of Claim 1 wherein said component part that defines said recess comprises a pin retainer.

8. The fiber optic connector of Claim 1 wherein said component part that defines said recess comprises a spacer.

9. The fiber optic connector of Claim 1 wherein said component part that defines said recess comprises a ferrule.

10. A fiber optic connector comprising:
a housing;
a plurality of component parts for securing a portion of at least one optical fiber within said housing;
a spring positioned between two of said component parts, wherein one of said two component parts has an aft surface and defines a recess therein for receiving a portion of said spring therein, and wherein said one component part also defines an opening that opens through said recess for receiving the at least one optical fiber.

11. The fiber optic connector of Claim 10 wherein said two component parts are positionable at least partially within said housing.

12. The fiber optic connector of Claim 10 wherein said recess has a substantially frustoconical shape.

13. The fiber optic connector of Claim 10 wherein said recess is partially defined by a curved surface.

14. The fiber optic connector of Claim 10 wherein said recess is partially defined by sloped sidewalls.

15. The fiber optic connector of Claim 14 wherein said recess is further defined by a bottom surface and a radiused transition between said sloped sidewalls and said bottom surface.

16. The fiber optic connector of Claim 14 wherein said sidewalls are positioned at an angle of approximately 15° with respect to a line perpendicular to the remainder of the aft surface of said component part.

17. The fiber optic connector of Claim 10 wherein said component part that defines said recess comprises a pin retainer.

18. The fiber optic connector of Claim 10 wherein said component part that defines said recess comprises a spacer.

19. The fiber optic connector of Claim 10 wherein said component part that defines said recess comprises a ferrule.

20. A fiber optic connector comprising:
a housing;
a ferrule, a pin retainer, and a spring push member at least partially disposed in said housing; and
a spring positioned between said pin retainer and said spring push member,
wherein said pin retainer has an aft surface, and wherein said aft surface of said pin retainer defines a recess for receiving a portion of said spring therein.

21. The fiber optic connector of Claim 20 wherein said recess is defined by a reaction face delimited by sidewalls.

22. The fiber optic connector of Claim 21 wherein said sidewalls are sloped.

23. A fiber optic connector comprising:
a housing;
a ferrule, a spacer, and a spring push member at least partially disposed in said housing; and
a spring positioned between said spacer and said spring push member,
wherein said spacer has an aft surface, and wherein the aft surface of said spacer defines a recess for receiving a portion of said spring therein.

24. The fiber optic connector of Claim 23 wherein said recess is defined by a reaction face delimited by sidewalls.

25. The fiber optic connector of Claim 24 wherein said sidewalls are sloped.

26. A fiber optic connector comprising:
a housing;
a ferrule and a spring push member at least partially disposed in said housing; and
a spring positioned between said ferrule and said spring push member,
wherein said ferrule has an aft surface, and wherein the aft surface of said ferrule defines a recess for receiving a portion of said spring therein.

27. The fiber optic connector of Claim 26 wherein said recess is defined by a reaction face delimited by sidewalls.

28. The fiber optic connector of Claim 27 wherein said sidewalls are sloped.

29. A pin retainer comprising:
a retainer body extending lengthwise between opposed forward and aft ends and defining a passageway extending therebetween for receiving at least one optical fiber, wherein said retainer body comprises an engagement portion, proximate the forward end of said retainer body, for engaging at least one guide pin; and
a spring positioner, proximate the aft end of said retainer body, for engaging a spring so as to retain the spring in position laterally relative to said retainer body of the pin retainer.

30. The pin retainer according to Claim 29 wherein said spring positioner comprises a recessed pocket defined by the aft end of said retainer body for receiving one end of the spring.

31. The pin retainer according to Claim 30 wherein the recessed pocket defined by the aft end of said retainer body has a circular shape.

32. The pin retainer according to Claim 30 wherein the recessed pocket is centered about that portion of the passageway defined by said retainer body opening through the aft end of said retainer body.

33. The pin retainer according to Claim 29 wherein said spring positioner comprises a projection extending outwardly from the aft end of said retainer body for engaging one end of the spring.

34. A fiber optic connector comprising:
a connector housing defining a lengthwise extending passageway extending between opposed forward and aft ends;
a ferrule disposed at least partially within the passageway defined by said connector housing;
a pin retainer disposed rearward of said ferrule within the passageway defined by said connector, said pin retainer comprising:
a retainer body extending lengthwise between opposed forward and aft ends; and
a spring positioner, proximate the aft end of said retainer body, for engaging a spring so as to retain the spring in position laterally relative to said retainer body of said pin retainer;
a spring disposed within the passageway defined by said connector housing, said spring disposed adjacent said pin retainer such that a leading end of said spring is engaged by said spring positioner which retains said spring in position laterally; and
a spring push member disposed rearward of said spring and proximate the aft end of said connector housing such that said spring is disposed between said pin retainer and said spring push member.

35. The fiber optic connector according to Claim 34 wherein said spring positioner comprises a recessed pocket defined by the aft end of said retainer body for receiving the leading end of said spring.

36. The fiber optic connector according to Claim 35 wherein the recessed pocket defined by the aft end of said retainer body has a circular shape.

37. The fiber optic connector according to Claim 35 wherein the recessed pocket is centered about that portion of the passageway defined by said retainer body opening through the aft end of said retainer body.

38. The fiber optic connector according to Claim 34 wherein said spring positioner comprises a projection extending outwardly from the aft end of said retainer body for engaging the leading end of said spring.
